# EUROPÄISCHE PATENTANMELDUNG

(11) **EP 1 016 846 A1**
(43) Veröffentlichungstag der Anmeldung: **05.07.2000**
(21) Anmeldenummer: 99124748.7
(22) Anmeldetag: 13.12.1999
(51) Int. Cl.: F27D 5/00

(54) **Brenngestell zum Brennen von schrägstehenden Dachziegeln**

(30) Priorität: 11.12.1998 DE 19857274; 11.06.1999 DE 29910249 U
(71) Anmelder: Keller GmbH, 49479 Ibbenbüren-Laggenbeck (DE)
(72) Erfinder: Turan Elbasi, 49479 Mettingen (DE); Holger Hoffmann, 58093 Hagen (DE); Köper, Ralf, 49479 Ibbenbüren (DE); Mansfeld, Michael, 49477 Ibbembüren (DE)

(57) **Zusammenfassung**

Die Erfindung betrifft ein Brenngestell zum Brennen von aus der Vertikalen geneigt schräggestellten Dachziegel-Formlingen, welche mit ihrer Rückseite jeweils von zwei mit Abstand zueinander auf horizontalen Tragbalken fixiert festlegbaren, paarweise zusammenwirkenden Stützfingern formgerecht abgestützt werden. Das Besondere besteht darin, daß
a) die einzelnen Stützfinger (4) als ein auch im beladenen Zustand "selbststehend" auf horizontaler Tragbalken-Oberfläche aufstellbares Teil ausgebildet sind,
b) jeder Stützfinger (4) ein Fußteil (4a) aufweist, dessen Standfläche in der Tragbalken-Längsrichtung eine größere Länge als im Tragbalken-Querschnitt aufweist,
c) benachbarte Stützfinger-Fußteile (4a) verschachtelt ineinandergreifend aufreihbar sind und/oder
d) die beiden Fußenden des Stützfinger-Fußteils (4a) jeweils mit einem Vorsprung (5) und einer danebenliegenden, als Gegenstück ausgeführten Ausnehmung (6) versehen sind sowie die beiden Vorsprünge (5) einerseits und die beiden Ausnehmungen (6) andererseits diagonal gegenüber liegen.

## Beschreibung

Ein derartiges Brenngestell ist bereits durch die DE-Zeitschrift ZI (Ziegelindustrie International) 7/98, Seite 448 bekannt geworden. Dabei sind die Tragbalken seitlich genutet und die einzelnen Stützfinger, jeweils ein Paar pro Dachziegel(formling), derart aufgesteckt, daß sie mit ihrem gegabelten Fußbereich den Tragbalken im Querschnitt dreiseitig umfassen. Die seitlichen Nuten in den Tragbalken scheinen vertikal zu verlaufen und die Gabelzinken in den Nuten verkantet einzugreifen - daraus ergibt sich eine keineswegs exakte Festlegung der Stützfinger, und letztlich besteht die Gefahr, daß aufgrund ungenauer Ausrichtung eines einen Dachziegel-Formling abstützenden Finger-Paares die Herstellung von minderwertigen Dachziegeln begünstigt wird. Weiterhin ist es nachteilig, daß aufgrund dieses Steckverbindung-Konzeptes die Ziegellast zum größten Teil von den Steckverbindungselementen aufgefangen wird, was eine erhebliche Materialbelastung ergibt - die sogenannte ,,Standzeit" wird dadurch erheblich beeinträchtigt.

Aus JP-A 8-29072, Figur 6, ist zwar eine exaktere Steckverbindung für die beiden Schenkel eines Dachziegel-Stützrahmens bekannt, jedoch erfolgt auch hier eine beträchtliche Belastung der Steckverbindung. Eine Entlastung des Formlingsträger-Aufstellbereichs wird zwar durch JP 08283961 A erzielt, wo selbststehende Stützrahmen für den Dachziegel-Schrägbesatz verwendet werden, es mangelt jedoch an Fixiermitteln zum genauen Ausrichten der Dachziegel-Stützrahmen auf den Tragbalken - eine maschinelle Beladung erscheint daher problembehaftet zu sein.

Der Erfindung liegt die Aufgabe zugrunde, ein gattungsgemäßes Brenngestell zum Dachziegel-Brennen zu schaffen, welches trotz Verwendung von Einzelfingern für die Formlingsabstützung eine exakte Dachziegel-Abstützung gewährleistet und eine problemlose maschinelle Beladung ermöglicht sowie eine die Tragbalken mit verringertem Moment belastende Stützfinger-Anordnung zeigt, so daß sowohl eine verbesserte Dachziegel-Qualität ermöglicht als auch die "Standzeit" (Lebensdauer) des Brenngestells gesteigert wird.

Erfindungsgemäß wird dies durch ein Brenngestell gemäß Anspruch 1 und 2 gelöst. Vorteilhafte Weiterbildungen ergeben sich aus den Unteransprüchen.

Auf der Zeichnung ist ein Ausführungsbeispiel der Erfindung dargestellt und wird im folgenden näher erläutert. Es zeigen:

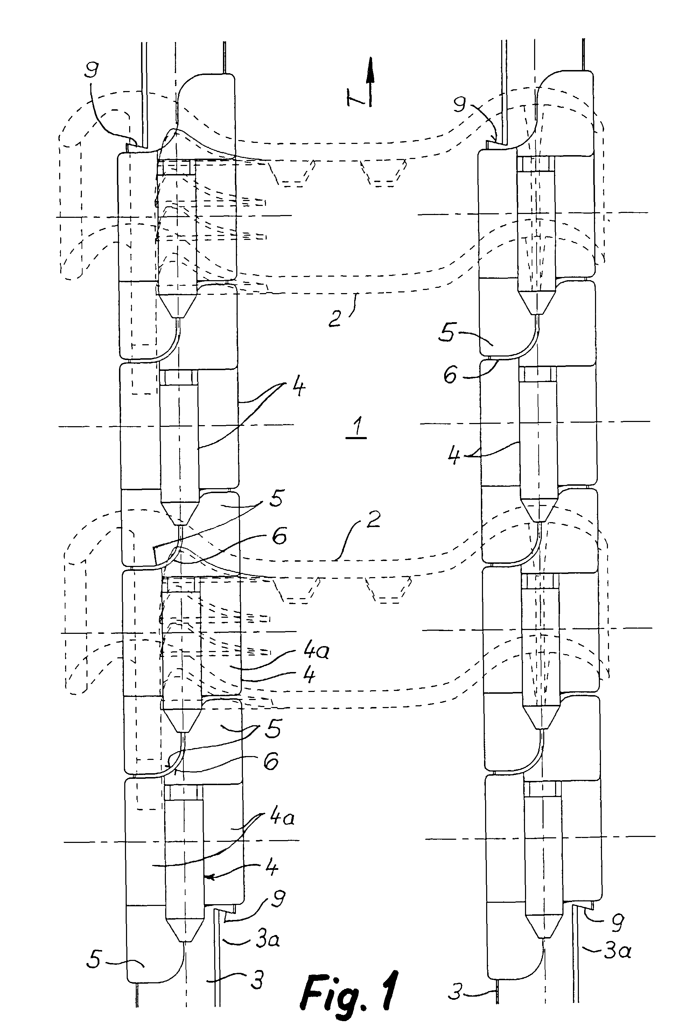

- Fig. 1: eine Draufsicht auf eine Brenngestell-Reihe mit auf jeweils zwei beabstandeten Tragbalken paarweise angeordneten Stützfingern zum Brennen von schrägstehenden Dachziegeln, wobei ein Besatz mit Ortgangziegeln (siehe gestrichelte Darstellung) auf jedem zweiten Stützfinger-Paar abgebildet ist,

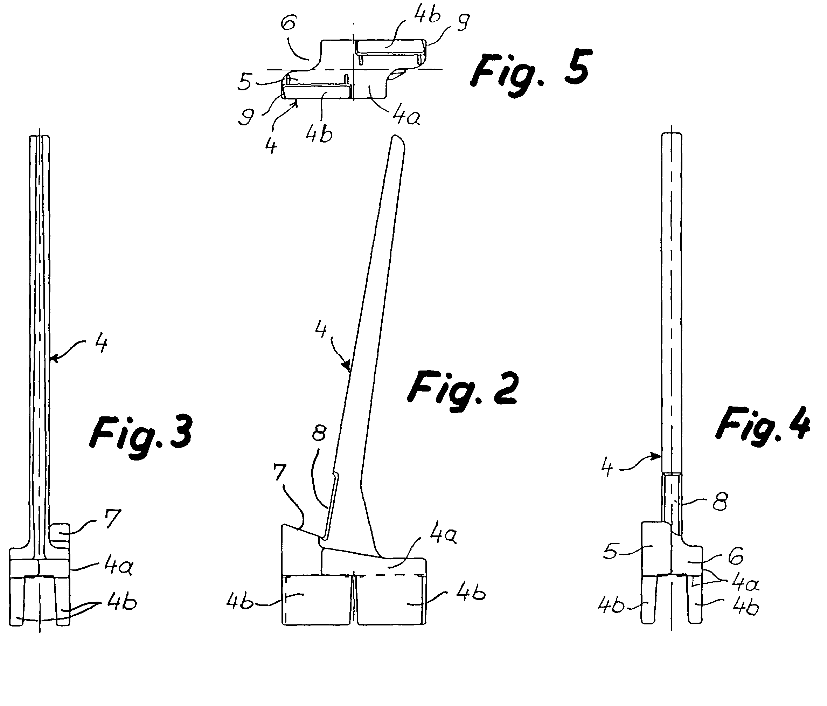

- Fig. 2: eine Seitenansicht eines erfindungsgemäßen Stützfingers,
- Fig. 3: eine Rückansicht (Ansicht von rechts in Fig. 1) desselben Stützfingers,
- Fig. 4: eine Vorderansicht (Ansicht von links in Fig. 1) desselben Stützfingers und
- Fig. 5: eine Unteransicht desselben Stützfingers.

Die Erfindung betrifft einen Ofenwagenaufbau mit Brenngestell 1 oder ein Brenngestell 1 zum Brennen von schrägstehenden Dachziegel-Formlingen (Dachziegeln) 2.

In jedem Fall sind horizontale Tragbalken 3 vorhanden, die vorzugsweise in Ofenwagen-Längsrichtung verlaufen. Diese Tragbalken 3 ruhen auf Querbalken (nicht dargestellt), welche von Stützen (ebenfalls nicht dargestellt) getragen werden.

Für die Abstützung eines jeden zu brennenden Dachziegel-Formlings 2 ist ein Paar von Stützfingern 4 vorhanden, welches die Dachziegel-Rückseite formgerecht abstützt. Die Dachziegel-Längsachse verläuft dabei aus der Vertikalen geneigt - der zwischen den Dachziegel-Stützflächen und der Horizontalen eingeschlossene Winkel beträgt etwa 60 - 85°.

Jeder Stützfinger 4 weist einen im wesentlichen gegabelten Fußbereich auf, der sich aus einem Fußteil 4a und zwei Justierstegen 4b zusammensetzt. Die Stützfinger 4 sind jeweils als selbststehendes Teil (und dies auch im beladenen Zustand) ausgebildet, in Betriebsstellung auf der Tragbalken-Oberseite aufgesetzt sowie durch Steckverbindung positionsgenau fixiert, wobei die seitlichen Justierstege 4b in seitliche Nuten 3a des Tragbalkens 3 eingreifen.

Jeder Stützfinger 4 besitzt ein Fußteil 4a, das sich auf der Tragbalken-Oberseite kippsicher abstützt und dazu eine Standfläche aufweist, die in der Tragbalken-Längsrichtung eine größere Länge als im Tragbalken-Querschnitt hat. Die Abstützlänge in der Tragbalken-Längsrichtung ist dabei um mindestens 20 % größer als das Rastermaß zwischen den Formlings- oder Dachziegel-Stützflächen von zwei beabstandet hintereinander aufgereihten Dachziegel-Formlingen 2.

Benachbarte Stützfinger-Fußteile 4a greifen verschachtelt ineinander, d. h. ihre Standflächen sind in der Längenausdehnung einander teilweise überlappend aufreihbar. Bei einem bevorzugten Reihenabstand-Rastermaß von etwa 110 mm kann die Fußteil-Abstützlänge der Stützfinger 4 annähernd 150 mm betragen.

Dabei sind in bevorzugter Weise die beiden Fußenden des Stützfinger-Fußteils 4a jeweils mit einem Vorsprung 5 und einer danebenliegenden, als Gegenstück ausgeführten Ausnehmung 6 versehen sowie die beiden Vorsprünge 5 einerseits und die beiden Ausnehmungen 6 andererseits diagonal gegenüberliegend angeordnet.

Die seitlichen Justierstege 4b sind in der Tragbalken-Längsrichtung gegeneinander versetzt angeordnet, wobei der Justiersteg 4b der einen Seite in der vorderen Fußteil-Hälfte und der Justiersteg (4b) der anderen Seite in der hinteren Fußteil-Hälfte angebracht ist. Ein solcher Justiersteg-Versatz ermöglicht eine Stützfinger-Herstellung in einer zweigeteilten Form, in der zum Entformen die Formhälften einfach zur Seite bewegt werden.

Am Stützfinger-Fußteil 4a ist obenseitig ein Widerlager 7 - für eine Dachziegel-Stirnkante - vorgesehen, welches mit der einer Dachziegel-Rückseitenabstützung dienenden Fingeroberfläche einen Winkel von unter 90° einschließt. In besonders bevorzugter Weise ist dieser formlingstragende Winkel etwa 80° groß. Es wird durch diesen Winkel ein Heranziehen des Dachziegel-Formlings 2 an den Stützfinger 4 erreicht.

Desweiteren ist am unteren Fingerende jeder formlingstragende Stützfinger 2 mit einer Hinterschneidung 8 versehen.

Um auch bei einer Ausbildung mit diagonal versetzt gegenüberliegenden Justierstegen 4b ein Herausdrehen des Stützfinger-Fußteils 4 aus dem ihn aufnehmenden Tragbalken (3) zu verhindern, ist es bevorzugt und vorteilhaft, die Tragbalken-Nuten 3a und die Stützfinger-Justierstege 4b jeweils mit einer Hinterschneidung, insbesondere Schrägfläche 9, zu versehen.

Zumindest die Stützfinger 4, insbesondere dieselben und die Tragbalken 3 sowie Querbalken sind aus einem hochhitzebeständigen Werkstoff auf der Basis von SiC, vorzugsweise aus SiSiC, ausgebildet.

### Bezugszeichenliste

- 1: Brenngestell (als Ganzes)
- 2: Dachziegel/ Dachziegel-Formling
- 3: Tragbalken
- 3a: Nuten in 3
- 4: Stützfinger
- 4a: Fußteil von 4
- 4b: Justierstege an 4a
- 5: Vorsprung von 4a
- 6: Ausnehmung an 4a
- 7: Widerlager an 4 für 2
- 8: Hinterschneidung
- 9: Schrägfläche an 3a + 4b

## Patentansprüche

1. Brenngestell zum Brennen von aus der Vertikalen geneigt schräggestellten Dachziegel-Formlingen, welche mit ihrer Rückseite jeweils von zwei mit Abstand zueinander auf horizontalen Tragbalken festlegbaren, paarweise zusammenwirkenden Stützfingern formgerecht abgestützt werden, die jeweils mit einem gegabelten Fußbereich in Steckverbindung auf dem jeweiligen Tragbalken lösbar angeordnet sind,
dadurch gekennzeichnet, daß
a) die einzelnen Stützfinger (4) als ein auch im beladenen Zustand "selbststehend" auf horizontaler Tragbalken-Oberfläche aufstellbares Teil ausgebildet sind,
b) jeder Stützfinger (4) ein Fußteil (4a) aufweist, das sich auf der Tragbalken-Oberseite kippsicher abstützt sowie die Standfläche in der Tragbalken-Längsrichtung eine größere Länge als im Tragbalken-Querschnitt aufweist und diese Abstützlänge in der Tragbalken-Längsrichtung um mindestens 20 % größer ist als das Rastermaß zwischen den Formlings- oder Dachziegel-Stützflächen von zwei beabstandet hintereinander aufgereihten Dachziegel-Formlingen (2),
c) benachbarte Stützfinger-Fußteile (4a) verschachtelt, d. h. ihre Standflächen in der Längenausdehnung einander teilweise überlappend, aufreihbar sind.

2. Brenngestell zum Brennen von aus der Vertikalen geneigt schräggestellten Dachziegel-Formlingen, welche mit ihrer Rückseite jeweils von zwei mit Abstand zueinander auf horizontalen Tragbalken festlegbaren, paarweise zusammenwirkenden Stützfingern formgerecht abgestützt werden, die jeweils mit einem gegabelten Fußbereich in Steckverbindung auf dem jeweiligen Tragbalken lösbar angeordnet sind,
dadurch gekennzeichnet, daß
a) die einzelnen Stützfinger (4) als ein auch im beladenen Zustand "selbststehend" auf horizontaler Tragbalken-Oberfläche aufstellbares Teil ausgebildet sind,
b) jeder Stützfinger (4) ein Fußteil (4a) aufweist, das sich auf der Tragbalken-Oberseite kippsicher abstützt sowie dabei in der Tragbalken-Längsrichtung eine größere Länge als im Tragbalken-Querschnitt aufweist und
c) die beiden Fußenden des Stützfinger-Fußteils (4a ) jeweils mit einem Vorsprung (5) und einer danebenliegenden, als Gegenstück ausgeführten Ausnehmung (6) versehen sind sowie die beiden Vorsprünge (5) einerseits und die beiden Ausnehmungen (6) andererseits diagonal gegenüberliegen.

3. Brenngestell nach Anspruch 1 oder 2, dadurch gekennzeichnet, daß jeder Stützfinger-Fußteil (4a) den Tragbalken (3) mit seitlichen Justierstegen (4b) überfaßt, die in der Tragbalken-Längsrichtung gegeneinander versetzt angeordnet sind.

4. Brenngestell nach Anspruch 3, dadurch gekennzeichnet, daß der Justiersteg (4b) der einen Seite in der vorderen Fußteil-Hälfte und der Justiersteg (4b) der anderen Seite in der hinteren Fußteil-Hälfte angeordnet ist.

5. Brenngestell nach mindestens einem der Ansprüche 1 bis 4, dadurch gekennzeichnet, daß die stützfingertragenden Tragbalken (3 ) mit Höhenabstand zur Brennraum-Bodenisolation angeordnet sind.

6. Brenngestell nach mindestens einem der Ansprüche 1 bis 5, dadurch gekennzeichnet, daß die Tragbalken (3) in Ofenwagen-Längsrichtung verlaufen und auf Querbalken ruhen, welche von Stützen getragen sind.

7. Brenngestell nach mindestens einem der Ansprüche 1 bis 6, dadurch gekennzeichnet, daß zumindest die Stützfinger (4), insbesondere dieselben und die Tragbalken (3) sowie Querbalken, aus einem hochhitzebeständigen Werkstoff auf der Basis von SiC, vorzugsweise aus SiSiC, ausgebildet sind.

8. Brenngestell nach mindestens einem der Ansprüche 1 bis 7, dadurch gekennzeichnet, daß am Stützfinger-Fußteil (4a) obenseitig ein Widerlager (7) - für eine Dachziegel-Stirnkante - vorgesehen ist, welches mit der einer Dachziegel-Rückseitenabstützung dienenden Fingeroberfläche einen Winkel von unter 90° einschließt.

9. Brenngestell nach mindestens einem der Ansprüche 1 bis 8, dadurch gekennzeichnet, daß die Dachziegel-Stützflächen aus der Vertikalen in einem Winkel von etwa 5 - 30° geneigt sind.

10. Brenngestell nach einem der Ansprüche 1 bis 9, insbesondere nach Anspruch 1 und/oder 9, dadurch gekennzeichnet, daß am unteren Fingerende die formlingstragenden Stützfinger (4) mit einer Hinterschneidung (8) versehen sind.
